# EUROPEAN PATENT APPLICATION

(11) **EP 3 163 411 A1**
(43) Date of publication of application: **03.05.2017**
(21) Application number: 16164014.9
(22) Date of filing: 06.04.2016
(51) Int. Cl.: G06F 3/0354, G06F 1/16, G06F 9/46, H04M 1/247

(54) **METHOD, DEVICE AND APPARATUS FOR APPLICATION SWITCHING**

(30) Priority: 30.10.2015 CN 201510729110
(71) Applicant: Xiaomi Inc., Beijing 100085 (CN)
(72) Inventor: GAO, Yi, 100085 Beijing (CN); WANG, Hongqiang, 100085 Beijing (CN); GE, Yunyuan, 100085 Beijing (CN)
(74) Representative: Sackin, Robert

(57) **Abstract**

A method, device and apparatus for application switching are provided in the disclosure. The method includes: detecting (101) a touch operation on a rear screen of a terminal; and switching (102) an application on a current interface of a front screen of the terminal to a preset application corresponding to the touch operation, in case of the touch operation matching a preset condition. With the technical solution of embodiments of the disclosure, a switch to an application corresponding to a touch operation is performed when it is detected that the touch operation on a rear screen matches a preset condition, such that applications on a front screen of a terminal can be quickly switched through an operation on the rear screen of the terminal, which is convenient and meets requirements of users.

## Description

### FIELD

The present disclosure generally relates to a technical field of mobile communication, and more particularly to a method, device and apparatus for application switching.

### BACKGROUND

With continuous development of the technology of intelligent mobile terminals, a mobile terminal may provide a user with a variety of applications ("apps"). The user may enjoy a service by opening a corresponding application after installing a variety of applications on the mobile terminal. The mobile terminal may provide the user with a multiprocessing application open mode, i.e., a plurality of applications may simultaneously run on background of the mobile terminal. When the user opens several applications, he/she may want to switch between these applications, for example, the user is currently viewing a "short message service (SMS)" interface of a SMS app, and after that he/she wants to quickly switch to a "browser service" interface of a browser app. Therefore, it is important for a user when using a mobile terminal to quickly switch from a current application interface to an interface of another application running in the background.

### SUMMARY

According to a first aspect of embodiments of the present disclosure, a method for application switching is provided, including: detecting a touch operation on a rear screen of a terminal; and switching an application on a current interface of a front screen of the terminal to a preset application corresponding to the touch operation, in case of the touch operation matching a preset condition.

Alternatively, the switching an application on a current interface of a front screen of the terminal to a preset application corresponding to the touch operation may include: switching, according to a record of opened applications, the application on the current interface of the front screen of the terminal to a preset application corresponding to the touch operation in the opened applications, in case of the touch operation matching the preset condition.

Alternatively, the record of opened applications includes names and exit time information of the opened applications, and wherein for switching of the application on the current interface of the front screen of the terminal to a preset application corresponding to the touch operation in the opened applications, the preset application corresponding to the touch operation in the opened applications is determined with reference to the exit time information of the opened applications.

Alternatively, the opened applications as recorded are ordered according to exit time for each of the opened applications exiting for the first time.

Alternatively, the above switching step may include: switching the application on the current interface of the front screen of the terminal to the preset application corresponding to the touch operation, in case of either a sliding direction of the touch operation matching a preset direction or a sliding direction of the touch operation matching the preset direction and a sliding distance being larger than or equivalent to a defined threshold value.

Additionally, the above switching step may include switching to an application opened right, directly or immediately before the application on the current interface of the front screen, in case of either the sliding direction of the touch operation towards left or the sliding direction of the touch operation towards left and the sliding distance being larger than or equivalent to the defined threshold value, and switching to a firstly opened application, in case of either the sliding direction of the touch operation towards right or the sliding direction of the touch operation towards right and the sliding distance being larger than or equivalent to the defined threshold value. Alternatively, the above switching step may include switching to an application opened right before the application on the current interface of the front screen, in case of either the sliding direction of the touch operation towards right or the sliding direction of the touch operation towards right and the sliding distance being larger than or equivalent to the defined threshold value, and switching to a firstly opened application, in case of either the sliding direction of the touch operation towards left or the sliding direction of the touch operation towards left and the sliding distance being larger than or equivalent to the defined threshold value.

Alternatively, the sliding direction and the sliding distance may be determined according to a start position and an end position of the touch operation on the rear screen of the terminal.

Alternatively, the above switching step may include: switching the application on the current interface of the front screen of the terminal to the preset application corresponding to the touch operation, in case of either a click position of the touch operation matching a preset position or a click position of the touch operation matching the preset position and a click duration being larger than or equivalent to a defined threshold value.

According to a second aspect of embodiments of the present disclosure, a device for application switching is provided, including: a detecting module configured to detect a touch operation on a rear screen of a terminal; and a switching module configured to switch an application on a current interface of a front screen of the terminal to a preset application corresponding to the touch operation, in case of the touch operation matching a preset condition.

Alternatively, the device may further include: a recording module configured to recording opened applications; wherein the switching module is configured to switch, according to the opened applications recorded by the recording module, the application on the current interface of the front screen of the terminal to a preset application corresponding to the touch operation in the opened applications, in case of the touch operation matching the preset condition.

Alternatively, the switching module may include: a first switching module configured to switch the application on the current interface of the front screen of the terminal to the preset application corresponding to the touch operation, in case of a sliding direction of the touch operation matching a preset direction; or a second switching module configured to switch the application on the current interface of the front screen of the terminal to the preset application corresponding to the touch operation, in case of a sliding direction of the touch operation matching the preset direction and a sliding distance being larger than or equivalent to a defined threshold value.

Additionally, the device may further include: a calculating module configured to determine the sliding direction and the sliding distance according to a start position and an end position of the touch operation on the rear screen of the terminal.

Alternatively, the switching module may include: a first switching module configured to switch the application on the current interface of the front screen of the terminal to the preset application corresponding to the touch operation, in case of a click position of the touch operation matching a preset position; or a second switching module configured to switch the application on the current interface of the front screen of the terminal to the preset application corresponding to the touch operation, in case of a click position of the touch operation matching the preset position and a click duration being larger than or equivalent to a defined threshold value.

According to a third aspect of embodiments of the present disclosure, a terminal device is provided, including: a processor and a memory for storing instructions executable by the processor, wherein the processor is configured to: detect a touch operation on a rear screen of the terminal device; and switch an application on a current interface of a front screen of the terminal device to a preset application corresponding to the touch operation, in case of the touch operation matching a preset condition.

Technical solutions of embodiments of the disclosure may provide at least some of the following beneficial effects.

With the disclosure, a mobile terminal having both a front screen and a rear screen may implement quick application switching through an operation on the rear screen of the terminal by following steps: detecting the touch operation on the rear screen (such as, various slide or click operations etc.); presetting a correspondence between the touch operation on the rear screen and the application switching on the front screen; and switching an application on a current interface of the front screen of the terminal to a preset application corresponding to the touch operation, in case of the touch operation matching a preset condition. This approach is convenient and meets requirements of users.

With the disclosure, information related to an application opened by a touch operation on the front screen of the terminal may be recorded. The application on the current interface of the front screen of the terminal may be switched to a preset application corresponding to the touch operation in the opened applications, according to the record of the opened applications.

With the disclosure, exit time of each of the opened applications exiting for the first time may be recorded, such that all the applications may be ordered according to the exit time of each of the opened applications exiting for the first time.

With the disclosure, the touch operation on the rear screen may be a slide operation. In order to reduce misoperation probability of the touch operation on the rear screen, a threshold value of sliding distance may be defined; and only when a sliding distance of the slide operation on the rear screen by a user's finger is larger than or equivalent to the defined threshold value, an instruction for performing the application switching may be activated.

With the disclosure, the slide operation may be set flexibly, for example, sliding in a left-right direction, or sliding in an up-down direction.

With the disclosure, the touch operation on the rear screen may be a click operation. In order to reduce misoperation probability of the touch operation on the rear screen, a threshold value of a click duration may be defined; and only when a duration of the click operation on the rear screen by a user is larger than or equivalent to the defined threshold value, instructions for performing the application switching may be activated.

It is to be understood that both the forgoing general description and the following detailed description are exemplary only, and are not restrictive of the present disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart illustrating a method for application switching according to an exemplary embodiment.
Fig. 2 is a flow chart illustrating another method for application switching according to an exemplary embodiment.
Fig. 3 is a flow chart illustrating another method for application switching according to an exemplary embodiment.
Fig. 4 is a block diagram illustrating a device for application switching according to an exemplary embodiment.
Fig. 5 is a block diagram illustrating another device for application switching according to an exemplary embodiment.
Fig. 6 is a block diagram illustrating a terminal device according to an exemplary embodiment.
Fig. 7 is a structural block diagram illustrating a device according to an exemplary embodiment.

### DETAILED DESCRIPTION

Reference will now be made in detail to exemplary embodiments, examples of which are illustrated in the accompanying drawings. The following description refers to the accompanying drawings in which same numbers in different drawings represent same or similar elements unless otherwise described. The implementations set forth in the following description of exemplary embodiments do not represent all implementations consistent with the invention. Instead, they are merely examples of devices and methods consistent with aspects related to the invention as recited in the appended claims.

Terms used in the disclosure are only for purpose of describing particular embodiments, and are not intended to limit the disclosure. The terms "a", "said" and "the" used in singular form in the disclosure and appended claims are intended to include a plural form, unless the context explicitly indicates otherwise. It should be understood that the term "and/or" used in the description means and include any or all combinations of one or more associated and listed terms.

It should be understood that, although the disclosure may use terms, such as, "first", "second" and "third" to describe various information, the information should not be limited herein. These terms are only used to distinguish information of the same type from each other. For example, first information may also be referred to as second information, and the second information may also be referred to as the first information, without departing from the scope of the disclosure. Based on context, the word "if" used herein may be interpreted as "when", or "while", or "in response to a determination".

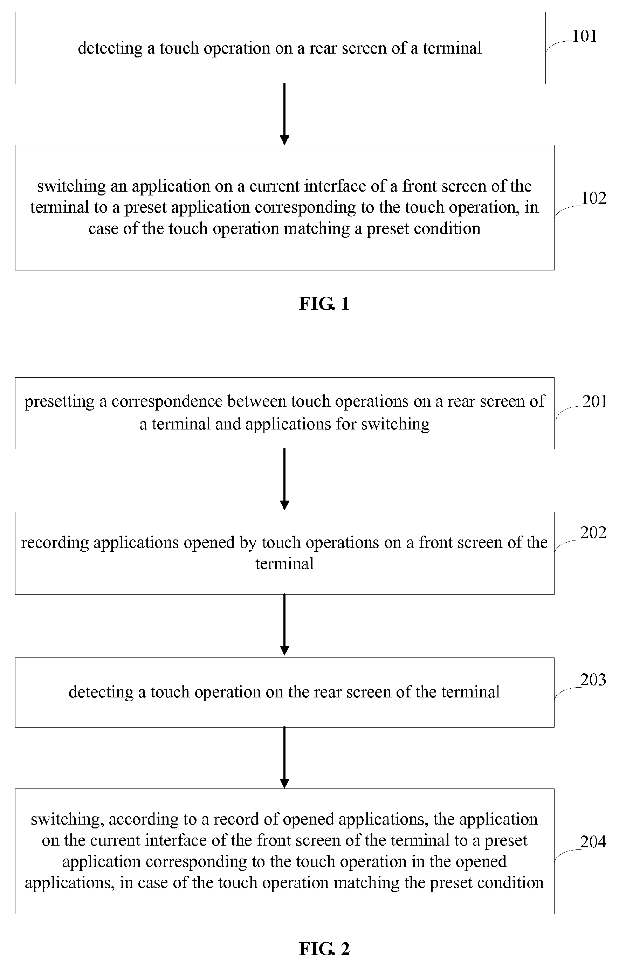

Fig. 1 is a flow chart illustrating a method for application switching according to an exemplary embodiment. The method may be applied in a terminal having a front screen and a rear screen which are all touchable and may include the following steps.

In step 101, a touch operation on the rear screen of the terminal may be detected.

In the step, a system application may be used to keep detecting an touch operation of a user on the rear screen of the terminal. The touch operation may be, for example, various sliding or click operations, etc.

In step 102, an application on a current interface of the front screen of the terminal may be switched to a preset application corresponding to the touch operation, in case of the touch operation matching a preset condition.

The step may include switching the application on the current interface of the front screen of the terminal to the preset application corresponding to the touch operation, in case of either a sliding direction of the touch operation matching a preset direction or a sliding direction of the touch operation matching the preset direction and a sliding distance being larger than or equivalent to a defined threshold value.

For example, the above switching step may include switching to an application opened right before the application on the current interface of the front screen, in case of either the sliding direction of the touch operation towards left or the sliding direction of the touch operation towards left and the sliding distance being larger than or equivalent to the defined threshold value; and switching to a firstly opened application, in case of either the sliding direction of the touch operation towards right or the sliding direction of the touch operation towards right and the sliding distance being larger than or equivalent to the defined threshold value.

Alternatively, the above switching step may include switching to an application opened right before the application on the current interface of the front screen, in case of either the sliding direction of the touch operation towards right or the sliding direction of the touch operation towards right and the sliding distance being larger than or equivalent to the defined threshold value; and switching to a firstly opened application, in case of either the sliding direction of the touch operation towards left or the sliding direction of the touch operation towards left and the sliding distance being larger than or equivalent to the defined threshold value.

The abovementioned sliding direction and the sliding distance may be determined according to a start position and an end position of the touch operation on the rear screen of the terminal.

As can be seen from the embodiment, by presetting a correspondence between touch operations (such as slide or click operations etc.) on a rear screen of a mobile terminal having both a front screen and the rear screen according to the disclosure and applications for switching and detecting a touch operation (such as, various sliding or click operations, etc.) on the rear screen of the terminal, an application on a current interface of the front screen of the terminal can be switched to a preset application corresponding to the touch operation, in case of the touch operation matching a preset condition such that the terminal is able to achieve quick application switching through an operation on the real screen of the terminal, which is convenient and meets requirements of users

Fig. 2 is a flow chart illustrating another method for application switching according to an exemplary embodiment. As compared with the flow chart of Fig. 1, in the flow chart of Fig. 2, the application switching may be performed according to a record of opened applications. The method may be applied in a terminal, and may include following steps.

In step 201, a correspondence between touch operations on the rear screen of the terminal and applications for switching may be preset.

In the step, it may be preset that an application on the current interface of the front screen of the terminal is switched to a preset application corresponding to the touch operation, in case of either a sliding direction of the touch operation matching a preset direction or a sliding direction of the touch operation matching the preset direction and a sliding distance being larger than or equivalent to a defined threshold value.

For example, the above switching step may include switching to an application opened right before the application on the current interface of the front screen, in case of either the sliding direction of the touch operation towards left or the sliding direction of the touch operation towards left and the sliding distance being larger than or equivalent to the defined threshold value; and switching to a firstly opened application, in case of either the sliding direction of the touch operation towards right or the sliding direction of the touch operation towards right and the sliding distance being larger than or equivalent to the defined threshold value. Alternatively, the above configuration may be reversed.

In the step, it may be preset that the application on the current interface of the front screen of the terminal may be switched to the preset application corresponding to the touch operation, in case of either a click position of the touch operation matching a preset position or the click position of the touch operation matching the preset position and a click duration being larger than or equivalent to a defined threshold value. For example, the above switching step may include switching to an application opened right before the application on the current interface of the front screen, in case of either the click position being at a left side of the screen or the click position being at the left side of the screen and the click duration being larger than or equivalent to the defined time threshold value; and switching to the firstly opened application, in case of either the click position being at a right side of the screen or the click position being at the right side of the screen and the click duration being larger than or equivalent to the defined time threshold value. Alternatively, the above configuration may be reversed.

In step 202, applications opened through touch operations on the front screen of the terminal may be recorded.

In the step, the record of opened applications may include names and exit time information of the opened applications. For the recorded opened applications, exit time of each of the opened applications exiting for the first time may be recorded. The exit time of the opened application would not be updated even if the opened application runs and exits once again, such that the record of opened applications may be ordered according to the exit time of each of the opened applications exiting for the first time.

In step 203, a touch operation on the rear screen of the terminal may be detected.

In the step, a system application may be used to keep detecting a touch operation of a user on the rear screen of the terminal. The touch operation, for example, may be various sliding or click operations, etc.

In step 204, the application on the current interface of the front screen of the terminal may be switched, according to the record of opened applications, to a preset application corresponding to the touch operation in the opened applications, in case of the touch operation matching a preset condition.

In the step, for switching of the application on the current interface of the front screen of the terminal to a preset application corresponding to the touch operation in the opened applications, the preset application corresponding to the touch operation in the opened applications may be determined with reference to the exit time information of the opened applications recorded in step 202.

In the step, the application on the current interface of the front screen of the terminal may be switched, according to the correspondence between touch operations on the rear screen of the terminal and applications for switching preset in step 201 and according to the opened applications recorded in step 202, to a preset application corresponding to the touch operation in the opened applications, in case of the touch operation matching the preset condition. It may be referred to the examples in the above step 102 for different switching scenes.

As can be seen from the embodiment, by presetting correspondence between touch operations on the rear screen of the terminal and applications for switching, and recording the applications opened by touch operations on the front screen of the terminal, the application on the current interface of the front screen of the terminal may be switched, according to the record of opened applications, to a preset application corresponding to the touch operation in the opened applications, in case of the touch operation matching the preset condition.

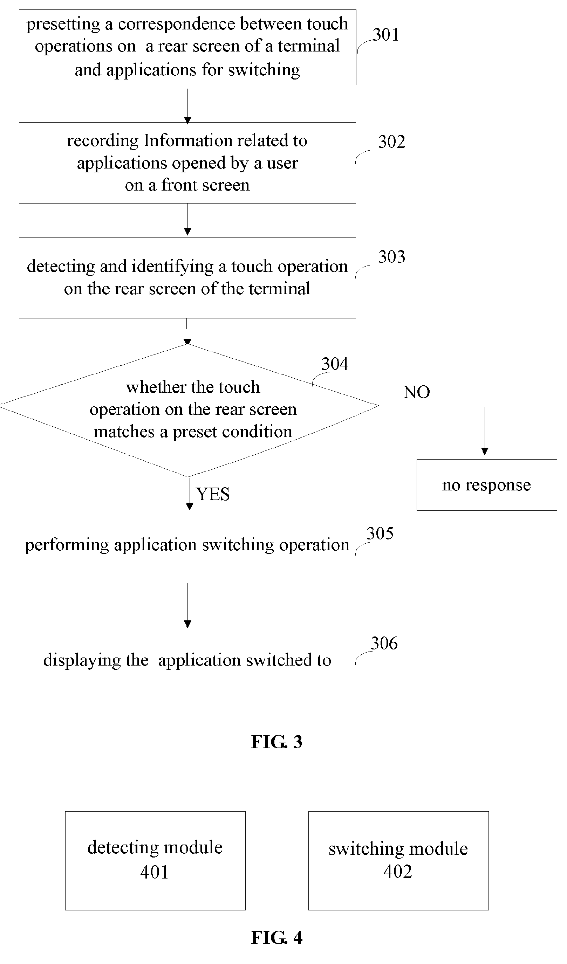

Fig. 3 is a flow chart illustrating another method for application switching according to an exemplary embodiment.

The method may be used in a terminal. In the disclosure, the terminal may be equipped with a front screen and a rear screen, both of which are touchable. In embodiments of the disclosure, the rear screen may receive a touch operation of a user on the rear screen and analyze sliding direction and sliding distance of the touch operation, and in turn control which application's interface will be switched to for display according to a preset condition, while an application is being used by the user on the front screen.

The method may include following steps.

In step 301, a correspondence between touch operations on the rear screen of the terminal and applications for switching may be preset.

In the step, gestures on the rear screen for switching an application interface and corresponding switching operations may be preset. For example, following correspondences may be set: if the user's finger slides towards left, it means switch to an interface of a preceding application opened right before the current application; and if the user's finger slides towards right, it means switch to an interface of an earliest opened application, i.e., the interface of a firstly opened application. Of course, the above configuration may be reversed, i.e., if the user's finger slides towards right, it means switch to an interface of a preceding application opened right before the current application; and if the user's finger slides towards left, it means switch to an interface of an earliest opened application. The configuration of gestures may be set as needed.

It should be noted that sliding in an up-down direction may also be set as needed, in addition to the configuration of sliding in the left-right direction, and the present disclosure is not limited thereto. For example, following correspondences may be set: if the user's finger slides upward, it mean switch to an interface of a preceding application opened right before the current application; and if the user's finger slides downward, it means switch to an interface of an earliest opened application interface. Alternatively, the configuration may be reversed.

It should be noted that the above description illustrates an example in which the touch operation is a sliding operation; however, the touch operation may also be a click operation. For example, following correspondences may be set: if the user's finger clicks at the left side, it means switch to an interface of a preceding application opened right before the current application; and if the user's finger clicks at the right side, it means switch to an interface of an earliest opened application. Alternatively, the configuration may be reversed. Click operations on an upper part or lower part may be set similarly.

Further, in order to reduce misoperation probability of an touch operation on the rear screen, a threshold value of "sliding distance" (such as 3 cm) may be defined in an embodiment of the disclosure, and only when a sliding distance of a sliding operation of a user's finger on the rear screen is larger than or equivalent to the defined threshold value, instructions for performing application switching can be activated. For example, if the user's finger slides towards left and the sliding distance is larger than or equivalent to the threshold value of sliding distance, it means switch to an interface of an preceding application opened right before the current application; and if the user's finger slides towards right and the sliding distance is larger than or equivalent to the threshold value of sliding distance, it means switch to an interface of an earliest opened application.

During configuration of the click operations, it may be set that the switching operation can be activated only when a click duration exceeds a threshold value of click duration, such as 3 seconds. Principles for configuring the threshold value of click duration may be similar as those for configuring the threshold value of sliding distance. For example, if the user's finger clicks on the left and the click duration is larger than or equivalent to the threshold value of click duration, it means to switch to an interface of an preceding application opened right before the current application; and if the user's finger clicks on the right and the click duration is larger than or equivalent to the threshold value of click duration, it means switch to an interface of an earliest opened application. Alternatively, the configuration may be reversed.

In step 302, information related to applications opened by the user on the front screen may be recorded.

When the user normally uses the mobile terminal, the current application will exit at some situations which may include: (1) the system will close the application upon detection of a user's click on a "Return" button; (2) the system will set the application as a background application (which is not shown with an interface, but still continues running on the background of the system) upon detection of a user's click on the "Home" button.

For either of the above two situations, the system may record the application's name and exit time, and record the application in a list of opened applications.

The list may be in a form as follow, but is not limited thereto.

| Names of applications | Exit time |
|---|---|
| Camera | 2015-07-07 06:57 |
| Browser | 2015-07-07 7:00 |
| Short Message Service (SMS) | 2015-07-07 7:05 |
| Microblog | 2015-07-07 7:07 |
| ... | ... |

As shown in the list, the camera application exits at 06:57, so it is the firstly exited application, which also indicate that the camera application is the firstly opened application. Further, The microblog application exits at 7:07, so it is the lastly exited application, which also indicate that the microblog application is the application right before the current application.

In embodiments of the disclosure, an application may be recorded in the list of "opened applications" when it exits for the first time. That is, the list may be updated by adding a new record to record exit time of a recently exited application. However, the exit time in the list would not be updated even if the application runs and exits once again, such that all the applications may be ordered according to the exit time of each of the applications exiting for the first time.

In step 303, a touch operation on the rear screen of the terminal may be detected and identified.

In the step, taking that the touch operation is a sliding operation as an example, an interface provided by the system may be used for acquiring a start position and an end position of a sliding gesture on the screen in a transverse axis direction, i.e., X axis direction, which may be denoted as x1 and x2 respectively. It may be calculated whether the user slides towards left or right according to values of x1 and x2. For example: (1) x1-x2<0: a sliding towards left; and (2) x1-x2>0: a sliding towards right.

It should be noted that different systems may have different definitions of a direction of X axis. For example, a forward direction of X axis may be defined as a direction from left to right on the screen; or the forward direction of X axis may be defined as a direction from right to left on the screen. In the embodiment, the forward direction of X axis of a screen is defined as a direction from left to right on the current screen. If the forward direction of X axis is defined as a direction from right to left on the screen, the calculation may be just the opposite.

A sliding distance may also be calculated according to the start position and the end position. The sliding distance is a distance of a sliding gesture staring from a position where the user's finger touches the screen to another position where the user's finger stops sliding and leaves away from the screen. If the absolute value of the sliding distance is larger than or equivalent to a preset threshold value of sliding distance, it may mean activation of a switching operation to a corresponding application.

In step 304, it is determined whether the touch operation on the rear screen matches a preset condition; if so, the method may proceed to step 305; otherwise, no response would be made, i.e., no switching operation would be performed.

The sliding direction and sliding distance of the touch operation of the user on the rear screen have been identified in step 303. If the sliding distance is smaller than a preset threshold value of sliding distance, no process would be performed; and if the sliding distance is larger than or equivalent to the preset threshold value of sliding distance, following step 305 would be performed.

In case that the touch operation is a click operation, if the click duration is smaller than a preset threshold value of click duration, no process would be performed; and if the click duration is larger than or equivalent to the preset threshold value of click duration, following step 305 would be performed.

In step 305, the application switching operation may be performed.

As preset, if the user's finger slides towards left, it means switch to an interface of a preceding application opened right before the current application; and if the user's finger slides towards right, it means switch to an interface of an earliest opened application, i.e., the firstly opened application.

Therefore, when the touch operation is determined as sliding towards left, an application whose exit time is earlier than and closest to current time (i.e., the application opened right before the current application) may be read from the list of "opened applications" recorded in step 302.

When the touch operation is determined as sliding towards right, an application whose exit time is earliest (i.e., the firstly exited application) may be read from the list of "opened applications".

As an example for step 305, assuming that the current time is 7:15 and an application shown on current interface is a "game" app, the "microblog" app will be switched to and opened upon detection of a sliding operation towards left and with a sliding distance larger than or equivalent to the threshold vale of sliding distance, since the the "microblog" app has the exit time of 7:07 which is earlier than the current time 7:15 and the "microblog" app is the first application among the applications whose exit time is earlier than the current time, i.e., the "microblog" app is the application opened right before the current application, and the "camera" app may be switched to and opened upon detection ofa sliding operation towards right and with a sliding distance larger than or equivalent to the threshold vale of sliding distance, since the "camera" app has a earliest exit time, i.e., the "camera" app is the firstly exited application which is also the firstly opened application, by referring to the list described in step 302.

In step 306, the application switched to may be displayed.

In the step, the application switched to may be displayed as a foreground process (i.e., an interface of the application can be shown to a user) by reading the name of the application from the list and invoking the system interface, such that quick application switching is implemented.

It should be noted that the embodiment is illustrated by taking the threshold value of sliding distance being set as an example; however, as appropriate, the embodiment may also be implemented by switching based on the sliding direction without the threshold value of sliding distance being set. The disclosure is not limited herein.

It should also be noted that the above process may be performed in case of another touch operation on the rear screen being detected. For example, in case that the user's finger slides towards left once again, the previous application switched to may be taken as the current application and would be switched to an application opened right before the application. For example, in case that the user's finger slides towards left once again after the game application has been switched to the microblog application, the SMS application exited right before the microblog application would be switched to.

As can be seen from the embodiment, by presetting a correspondence between touch operations (such as sliding or click operations, etc.) on the rear screen of the terminal and applications for switching, recording information (including names and exit time) related to the applications opened by the user on the front screen in a list, detecting a touch operation on the rear screen, , retrieving, a corresponding application for switching from the opened applications in the list according to sliding direction when it is determined that the sliding distance of the touch operation is larger than or equivalent to the threshold value of sliding distance or when it is determined that the click position of the touch operation conforms to a preset position and click duration is larger than or equivalent to a threshold value of click duration the current application on the front screen of the terminal will be switched to the corresponding application for display to the user, such that a quick application switching through a touch operation on the rear screen can be attained even if an application is utilized by the user on the front screen, which is convenient and meets requirements of users.

The disclosure further provides embodiments of a device for application switching and corresponding terminal, corresponding to the above embodiments of a method for implementing application switching functions.

Fig. 4 is a block diagram illustrating a device for application switching according to an exemplary embodiment.

As shown in Fig. 4, the device for application switching may include a detecting module 401 and a switching module 402.

The detecting module 401 may be configured to detect a touch operation on a rear screen of a terminal.

The switching module 402 may be configured to switch an application on a current interface of a front screen of the terminal to a preset application corresponding to the touch operation, in case of the touch operation matching a preset condition.

As can be seen from the embodiment, a mobile terminal having both a front screen and a rear screen according to the disclosure may implement quick application switching through an operations on the rear screen of the terminal by following steps: detecting a touch operation on the rear screen (such as, various slide or click operations etc.); presetting a correspondence between touch operations on the rear screen and applications to be switched on the front screen; and switching an application on a current interface of the front screen of the terminal to a preset application corresponding to the touch operation, in case of the touch operation matching a preset condition. This approach is convenient and meets requirements of users.

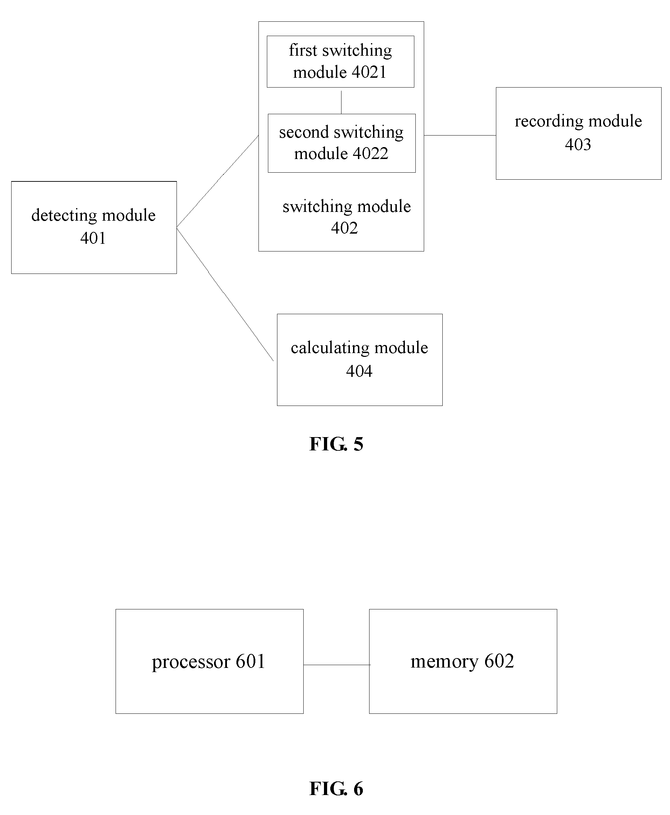

Fig. 5 is a block diagram illustrating another device for application switching according to an exemplary embodiment.

As shown in Fig. 5, the device for application switching may include a detecting module 401, a switching module 402, a recording module 403, and calculating module 404.

As to descriptions of functions of the detecting module 401 and switching module 402, it may be referred to those for Fig. 4.

The recording module 403 may be configured to have a record of opened applications.

The switching module 402 may be configured to switch, according to the opened applications recorded by the recording module 403, the application on the current interface of the front screen of the terminal to a preset application corresponding to the touch operation in the opened applications, in case of the touch operation matching the preset condition

The record of opened applications recorded by the recording module 403 may include names and exit time information of the opened applications. For switching of the application on the current interface of the front screen of the terminal to a preset application corresponding to the touch operation in the opened applications, the preset application corresponding to the touch operation in the opened applications may be determined with reference to the exit time information of the opened applications.

The opened applications recorded by the recording module 403 may be ordered according to exit time of each of the opened applications exiting for the first time.

The switching module 402 may include a first switching module 4021 and a second switching module 4022. It should be noted that the figure is only for purpose of illustration, and there may only include one switching sub-module.

The first switching module 4021 may be configured to switch the application on the current interface of the front screen of the terminal to the preset application corresponding to the touch operation, in case of a sliding direction of the touch operation matching a preset direction.

The second switching module 4022 may be configured to switch the application on the current interface of the front screen of the terminal to the preset application corresponding to the touch operation, in case of a sliding direction of the touch operation matching the preset direction and a sliding distance being larger than or equivalent to a defined threshold value.

Alternatively, a situation may be as follow.

The first switching module 4021 may be configured to switch the application on the current interface of the front screen of the terminal to the preset application corresponding to the touch operation, in case of a click position of the touch operation matching a preset position.

The second switching module 4022 may be configured to switch the application on the current interface of the front screen of the terminal to the preset application corresponding to the touch operation, in case of a click position of the touch operation matching the preset position and a click duration being larger than or equivalent to a defined threshold value.

In the embodiment, the application on the current interface of the front screen of the terminal may be switched to an application opened right before the application on the current interface of the front screen, in case of either the sliding direction of the touch operation towards left or the sliding direction of the touch operation towards left and the sliding distance being larger than or equivalent to the defined threshold value; or the application on the current interface of the front screen of the terminal may be switched to a firstly opened application, in case of either the sliding direction of the touch operation towards right or the sliding direction of the touch operation towards right and the sliding distance being larger than or equivalent to the defined threshold value.

Alternatively, the application on the current interface of the front screen of the terminal may be switched to an application opened right before the application on the current interface of the front screen, in case of either the sliding direction of the touch operation towards right or the sliding direction of the touch operation towards right and the sliding distance being larger than or equivalent to the defined threshold value; or the application on the current interface of the front screen of the terminal may be switched to the firstly opened application, in case of either the sliding direction of the touch operation towards left or the sliding direction of the touch operation towards left and the sliding distance being larger than or equivalent to the defined threshold value.

The calculating module 404 may be configured to determine the sliding direction and the sliding distance according to a start position and an end position of the touch operation on the rear screen of the terminal.

In the embodiment, by presetting a correspondence between touch operations (such as slide or click operations etc.) on the rear screen of the terminal and applications to be switched and recording in a list information about applications opened on the front screen by the user (including names and exit time of the applications), the application in current interface on the front screen of the terminal can be switched to an application if it is defected that a corresponding touch operation matches a preset condition for presenting to the user such that the user is able to achieve, when an application on the front screen is being used, a quick application switch through a touch operation on the rear screen, which is convenient and meets requirements of users.

The disclosure further provides embodiments of a device for application switching and a corresponding terminal that corresponds to the above embodiments of methods for implementing a function of application switching.

As to the processes for implementing functions and effects of each of the components in the above device, it may be referred to the processes for implementing corresponding steps in the above methods, and thus are omitted herein.

Since device embodiments may essentially correspond to method embodiments, it may be referred to the description of the method embodiments for those of the device embodiments. The above described device embodiments are only examples, wherein the components described as discrete elements may be or may not be physically separated; the elements shown as components may be or may not be physical components, i.e., the elements may be located in one place or distributed to a plurality of networking components. Apart or all of the modules may be selected to implement purposes of the solution of the disclosure as actually needed. Those of ordinary skills in the art may understand and implement the disclosure, without creative work.

Additionally, a terminal device is provided in the disclosure.

Fig. 6 is a block diagram illustrating a terminal device according to an exemplary embodiment.

As shown in Fig. 6, the terminal device may include a processor 601 and a memory602 for storing instructions executable by the processor.

The processor 601 is configured to: detect a touch operation on a rear screen of the terminal device; and switch an application on a current interface of a front screen of the terminal device to a preset application corresponding to the touch operation, in case of the touch operation matching a preset condition.

The processor 601 may be further configured to perform other executable instructions to implement corresponding steps in the above methods, which will not be elaborated herein.

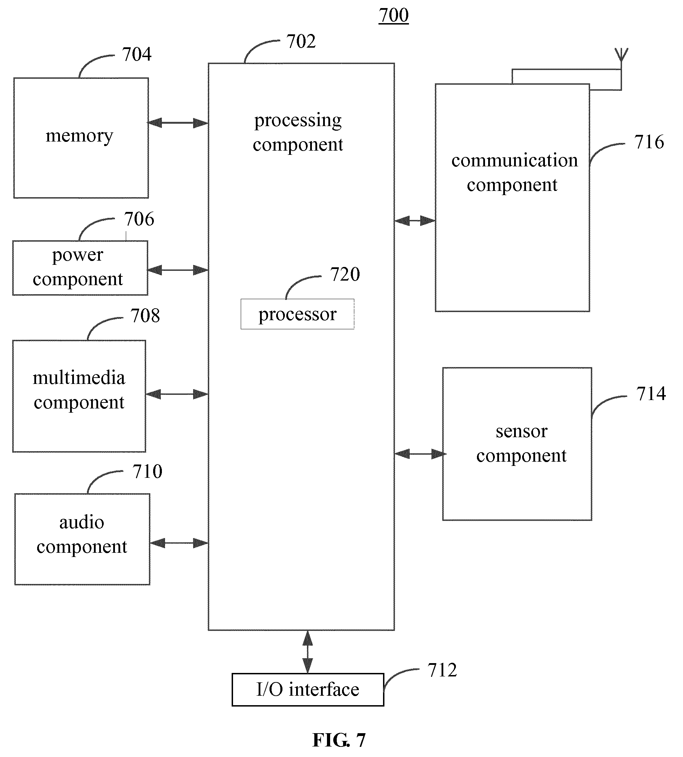

Fig. 7 is a structural block diagram illustrating a device according to an exemplary embodiment.

For example, the device 700 may be a mobile phone, a computer, a digital broadcast terminal, a messaging device, a gaming console, a tablet, a medical device, exercise equipment, a personal digital assistant, and the like.

Referring to Fig. 7, the device 700 may include one or more of the following components: a processing component 702, a memory 704, a power component 706, a multimedia component 708, an audio component 710, an input/output (I/O) interface 712, a sensor component 714, and a communication component 716.

The processing component 702 may typically control overall operations of the device 700, such as the operations associated with display, telephone calls, data communications, camera operations, and recording operations. The processing component 702 may include one or more processors 720 to execute instructions to perform all or part of the steps in the above described methods. Moreover, the processing component 702 may include one or more modules which facilitate the interaction between the processing component 702 and other components. For instance, the processing component 702 may include a multimedia module to facilitate the interaction between the multimedia component 708 and the processing component 702.

The memory 704 may be configured to store various types of data to support the operation of the device 700. Examples of such data include instructions for any applications or methods operated on the device 700, contact data, phonebook data, messages, pictures, video, etc. The memory 704 may be implemented using any type of volatile or non-volatile memory devices, or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic or optical disk.

The power component 706 provides power to various components of the device 700. The power component 706 may include a power management system, one or more power sources, and any other components associated with the generation, management, and distribution of power for the device 700.

The multimedia component 708 may include a screen providing an output interface between the device 700 and the user. In some embodiments, the screen may include a liquid crystal display (LCD) and a touch panel (TP). If the screen includes the touch panel, the screen may be implemented as a touch screen to receive input signals from the user. The touch panel includes one or more touch sensors to sense touches, swipes, and gestures on the touch panel. The touch sensors may not only sense a boundary of a touch or swipe action, but also sense a period of time and a pressure associated with the touch or swipe action. In some embodiments, the multimedia component 708 includes a front camera and/or a rear camera. The front camera and the rear camera may receive an external multimedia datum while the device 700 is in an operation mode, such as a photographing mode or a video mode. Each of the front camera and the rear camera may be a fixed optical lens system or have optical focusing and zooming capability.

The audio component 710 may be configured to output and/or input audio signals. For example, the audio component 710 includes a microphone ("MIC") configured to receive an external audio signal when the device 700 is in an operation mode, such as a call mode, a recording mode, and a voice recognition mode. The received audio signal may be further stored in the memory 704 or transmitted via the communication component 716. In some embodiments, the audio component 710 further includes a speaker to output audio signals.

The I/O interface 712 provides an interface between the processing component 702 and peripheral interface modules, the peripheral interface modules being, for example, a keyboard, a click wheel, buttons, and the like. The buttons may include, but are not limited to, a home button, a volume button, a starting button, and a locking button.

The sensor component 714 includes one or more sensors to provide status assessments of various aspects of the device 700. For instance, the sensor component 714 may detect an open/closed status of the device 700, relative positioning of components (e.g., the display and the keypad, of the device 700), a change in position of the device 700 or a component of the device 700, a presence or absence of user contact with the device 700, an orientation or an acceleration/deceleration of the device 700, and a change in temperature of the device 700. The sensor component 714 may include a proximity sensor configured to detect the presence of a nearby object without any physical contact. The sensor component 714 may also include a light sensor, such as a CMOS or CCD image sensor, for use in imaging applications. In some embodiments, the sensor component 714 may also include an accelerometer sensor, a gyroscope sensor, a magnetic sensor, a pressure sensor, or a temperature sensor.

The communication component 716 may be configured to facilitate communication, wired or wirelessly, between the device 700 and other devices. The device 700 can access a wireless network based on a communication standard, such as WiFi, 2G, or 3G, or a combination thereof. In an exemplary embodiment, the communication component 716 receives a broadcast signal or broadcast associated information from an external broadcast management system via a broadcast channel. In an exemplary embodiment, the communication component 716 further includes a near field communication (NFC) module to facilitate short-range communications. For example, the NFC module may be implemented based on a radio frequency identification (RFID) technology, an infrared data association (IrDA) technology, an ultra-wideband (UWB) technology, a Bluetooth (BT) technology, and other technologies.

In exemplary embodiments, the device 700 may be implemented with one or more application specific integrated circuits (ASICs), digital signal processors (DSPs), digital signal processing devices (DSPDs), programmable logic devices (PLDs), field programmable gate arrays (FPGAs), controllers, micro-controllers, microprocessors, or other electronic components, for performing the above described methods.

In exemplary embodiments, there is also provided a non-transitory computer readable storage medium including instructions, such as included in the memory 704, executable by the processor 720 in the device 700, for performing the above-described methods. For example, the non-transitory computer-readable storage medium may be a ROM, a RAM, a CD-ROM, a magnetic tape, a floppy disc, an optical data storage device, and the like.

Where functional modules are referred to in apparatus embodiments for carrying out various steps of the described method(s) it will be understood that these modules may be implemented in hardware, in software, or a combination of the two. When implemented in hardware, the modules may be implemented as one or more hardware modules, such as one or more application specific integrated circuits. When implemented in software, the modules may be implemented as one or more computer programs that are executed on one or more processors.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art. The specification and embodiments are merely considered to be exemplary and the substantive scope of the disclosure is limited only by the appended claims.

It should be understood that the disclosure is not limited to the precise structure as described above and shown in the figures, but can have various modification and alternations without departing from the scope of the disclosure. The scope of the disclosure is limited only by the appended claims.

## Claims

1. A method for application switching, **characterized in** comprising:
detecting (101) a touch operation on a rear screen of a terminal; and
switching (102) an application on a current interface of a front screen of the terminal to a preset application corresponding to the touch operation, in case of the touch operation matching a preset condition.

2. The method of claim 1, **characterized in that** the switching (102) an application on a current interface of a front screen of the terminal to a preset application corresponding to the touch operation, in case of the touch operation matching a preset condition comprises:
switching (204), according to a record of opened applications, the application on the current interface of the front screen of the terminal to a preset application corresponding to the touch operation in the opened applications, in case of the touch operation matching the preset condition.

3. The method of claim 2, **characterized in that** the record of opened applications comprises names and exit time information of the opened applications, and
wherein for switching of the application on the current interface of the front screen of the terminal to a preset application corresponding to the touch operation in the opened applications, the preset application corresponding to the touch operation in the opened applications is determined with reference to the exit time information of the opened applications.

4. The method of claim 3, **characterized in that**:
the opened applications as recorded are ordered according to exit time for each of the opened applications exiting for the first time.

5. The method of any of claims 1-4, **characterized in that** the switching comprises:
switching the application on the current interface of the front screen of the terminal to the preset application corresponding to the touch operation, in case of either of the following conditions:
a sliding direction of the touch operation matches a preset direction; or
a sliding direction of the touch operation matches a preset direction and a sliding distance is larger than or equivalent to a defined threshold value.

6. The method of claim 5, **characterized in that**:
the switching comprises switching to an application opened right before the application on the current interface of the front screen, in case of either the sliding direction of the touch operation towards left or the sliding direction of the touch operation towards left and the sliding distance being larger than or equivalent to the defined threshold value and switching to a firstly opened application, in case of either the sliding direction of the touch operation towards right or the sliding direction of the touch operation towards right and the sliding distance being larger than or equivalent to the defined threshold value; or
the switching comprises switching to an application opened right before the application on the current interface of the front screen, in case of either the sliding direction of the touch operation towards right or the sliding direction of the touch operation towards right and the sliding distance being larger than or equivalent to the defined threshold value and switching to a firstly opened application, in case of either the sliding direction of the touch operation towards left or the sliding direction of the touch operation towards left and the sliding distance being larger than or equivalent to the defined threshold value.

7. The method of claim 5, **characterized in that**:
the sliding direction and the sliding distance are determined according to a start position and an end position of the touch operation on the rear screen of the terminal.

8. The method of any of claims 1-4, **characterized in that** the switching comprises:
switching the application on the current interface of the front screen of the terminal to the preset application corresponding to the touch operation, in case of either of the following conditions:
a click position of the touch operation matches a preset position; or
a click position of the touch operation matches a preset position and a click duration is larger than or equivalent to a defined threshold value.

9. A device for application switching, **characterized by** comprising:
a detecting module (401) configured to detect a touch operation on a rear screen of a terminal; and
a switching module (402) configured to switch an application on a current interface of a front screen of the terminal to a preset application corresponding to the touch operation, in case of the touch operation matching a preset condition.

10. The device of claim 9, **characterized by** comprising:
a recording module (403) configured to record opened applications;
wherein the switching module (402) is configured to switch, according to the opened applications recorded by the recording module, the application on the current interface of the front screen of the terminal to a preset application corresponding to the touch operation in the opened applications, in case of the touch operation matching the preset condition.

11. The device of claims 9 or 10, **characterized in that** the switching module (402) comprises:
a first switching module (4021) configured to switch the application on the current interface of the front screen of the terminal to the preset application corresponding to the touch operation, in case of a sliding direction of the touch operation matching a preset direction; or
a second switching module (4022) configured to switch the application on the current interface of the front screen of the terminal to the preset application corresponding to the touch operation, in case of a sliding direction of the touch operation matching the preset direction and a sliding distance being larger than or equivalent to a defined threshold value.

12. The device of claim 11, **characterized in** further comprising:
a calculating module (404) configured to determine the sliding direction and the sliding distance according to a start position and an end position of the touch operation on the rear screen of the terminal.

13. The device of claims 9 or 10, **characterized in that** the switching module (402) comprises:
a first switching module (4021) configured to switch the application on the current interface of the front screen of the terminal to the preset application corresponding to the touch operation, in case of a click position of the touch operation matching a preset position; or
a second switching module (4022) configured to switch the application on the current interface of the front screen of the terminal to the preset application corresponding to the touch operation, in case of a click position of the touch operation matching the preset position and a click duration being larger than or equivalent to a defined threshold value.

14. A terminal device, **characterized by** comprising:
a processor (601); and
a memory (602) for storing instructions executable by the processor;
wherein the processor (601) is configured to:
detect a touch operation on a rear screen of the terminal device; and
switch an application on a current interface of a front screen of the terminal device to a preset application corresponding to the touch operation, in case of the touch operation matching a preset condition.

15. A non-transitory computer-readable storage medium having instructions stored thereon, the instructions when executed by a processor cause the processor to perform the method of any of claims 1 to 8.
